# EUROPÄISCHE PATENTSCHRIFT

(11) **EP 1 535 156 B1**
(45) Veröffentlichungstag und Bekanntmachung des Hinweises auf die Patenterteilung: **03.05.2006**
(21) Anmeldenummer: 03793461.9
(22) Anmeldetag: 03.09.2003
(51) Int. Cl.: G06F 11/00

(54) **VERFAHREN UND APPARAT ZUR FEHLERERKENNUNG IN EINEM VERTEILTEN ECHTZEITCOMPUTERSYSTEM**
METHOD AND DEVICE FOR RECOGNIZING ERRORS IN A DISTRIBUTED REAL-TIME COMPUTER SYSTEM
PROCEDE ET DISPOSITIF POUR IDENTIFIER DES ERREURS DANS UN SYSTEME INFORMATIQUE TEMPS REEL REPARTI

(30) Priorität: 05.09.2002 AT 13322002
(43) Veröffentlichungstag der Anmeldung: 01.06.2005
(73) Patentinhaber: FTS Computertechnik Ges.mbH, 2500 Baden-Siegenfeld (AT)
(72) Erfinder: KOPETZ, Hermann, A-2500 Baden bei Wien (AT)
(74) Vertreter: Forsthuber, Martin
(86) Internationale Anmeldenummer: PCT/AT2003/000256
(87) Internationale Veröffentlichungsnummer: WO 2004/023302

(56) Entgegenhaltungen:
- EP-B- 0 658 257
- US-A- 5 694 542
- US-A- 5 799 146

## Beschreibung

Die Erfindung betrifft ein Verfahren zur konsistenten Erkennung von Fehlern in einem verteilten Echtzeitcomputersystem, mit einer Vielzahl von Knotenrechnern, z.B. die fünf Knotenrechner, die über mindestens je einen Kommunikationskontroller und über je einen Host-Computer verfügen, und die über ein rundenbasiertes Echtzeitkommunikationssystem bestehend aus einem oder mehreren Kommunikationskanälen Nachrichten austauschen, wobei für jede logische Nachricht eine oder mehrere redundante physische Nachrichten transportiert werden, und wo alle Knotenrechner über einen Zugriff auf eine global synchronisierte Zeit verfügen.

Weiterhin betrifft die Erfindung einen Kommunikationskontroller eines Rechnerknotens eines verteilten Computersystems.

Ein verteiltes Echtzeitcomputersystem besteht aus einer Anzahl von Knotenrechnern, die über ein Echtzeitkommunikationssystem Nachrichten austauschen und die über lokale Schnittstellen einen technischen Prozess beobachten und beeinflussen. Solche verteilte Echtzeitcomputersysteme werden zunehmend zur Steuerung sicherheitskritischer Anwendungen eingesetzt. Beispiele für solche Anwendungen sind die Steuerung der Bremsen in einem Kraftfahrzeug oder ein Flugleitsystem in einem Flugzeug. In diesen Anwendungen ist es von großer Wichtigkeit, dass ein auftretender Fehler, der zum Verlust der Datenkonsistenz im verteilten System führen kann, schnell erkannt wird. Beispiele für solche Fehler sind der Verlust von Nachrichten, der Ausfall eines Knotenrechners, oder ein Fehler in der dem Knotenrechner zugeordneten Prozessperipherie.

Ein verteiltes Computersystem ist beispielsweise aus der US 5 799 146 A bekannt.

Im Weiteren wird auf den bekannten Stand der Technik wie folgt Bezug genommen:
[1] US 5 694 542 issüed on Dec. 12, 1989: A loosely coupled distributed computer system with node synchronization for precision in real time.
[2] EP 0 658 257 erteilt am 18.12.1996: Kommunikationskontrolleinheit und Verfahren zur Übermittlung von Nachrichten.
[3] US 5 887143 issued on March 23, 1999: Time-Triggered Communcation Control Unit and Communication.
[4] DE 197 532 88 eingereicht am 3. Dezember 1996: Effizientes Quittungsverfahren
[5] OMG Smart Transducer Interface Standard: URL: http://omg.org
[6] Kopetz, H. (1997). *Real-Time Systems, Design Principles for Distributed Embedded Applications; ISBN: 0-7923-9894-7.* Boston. Kluwer Academic Publishers.

Eine besonders häufige und damit wichtige Fehlerklasse in verteilten Echtzeitsystemen ist die Klasse der Crash/Omission (CO) Fehler. Die Fehlerklasse der CO-Fehler umfasst den Verlust von Nachrichten oder den Totalausfall von Knotenrechnern. Viele der bekannten Kommunikationsprotokolle enthalten Mechanismen, um CO Fehler zu erkennen [6]. Ein Verfahren, das CO Fehler in einem verteilten Echtzeitsystem erkennen kann, wurde in den Patentschriften [1-4] offengelegt. Dieses Verfahren geht davon aus, dass alle Rechner eines Subsystems (Clusters) an allen Funktionen des Systems beteiligt sind und die Inkonsistenz, die durch einen CO Fehler eines Knotenrechners verursacht wird, dadurch behoben wird, dass der betroffene Knotenrechner keine weiteren Nachrichten sendet bis er sich wieder erfolgreich reintegriert hat. Diese Art der Fehlererkennung und Fehlerbehandlung wird in einigen Anwendungsfällen als zu restriktiv angesehen, da auch der Ausfall einer einzigen Funktion eines Knotenrechners, der an mehreren Funktionen beteiligt ist, zum Ausfall des gesamten Knotenrechners führt.

Dieser Nachteil der auf einen Rechnerknoten bezogenen Fehlererkennung und Fehlerbehandlung wird durch die vorliegende Erfindung behoben, in dem bei dem eingangs erwähnten Verfahren erfindungsgemäß die Knotenrechner Funktionsgruppen bilden, wobei ein Knotenrechner Mitglied mehrerer Funktionsgruppen sein kann, und wo jeder Funktionsgruppe ein dediziertes Funktionsgruppenmitgliedfeld zugeordnet ist, dessen Bitlänge mindestens der Anzahl der Knotenrechner in dieser Funktionsgruppe entspricht, und wo jedem in einer Funktionsgruppe beteiligten Knotenrechner ein spezifiziertes Bit des Funktionsgruppenmitgliedfeldes eindeutig zugeordnet ist, und wo jeder Knotenrechner eine lokale Version des Funktionsgruppenmitgliedfeldes jeder Funktionsgruppe, an der er beteiligt ist, verwaltet, und wo vor dem Senden einer Nachricht der sendende Knoten das ihm zugeordnete Bit in seinem lokalen Funktionsgruppenmitgliedfeld auf WAHR setzt, wenn der sendende Knoten seine Funktionsfähigkeit in dieser Funktionsgruppe als gegeben ansieht, und wo vor dem Senden einer Nachricht der sendende Knoten das ihm zugeordnete Bit in seinem lokalen Funktionsgruppenmitgliedfeld auf FALSCH setzt, wenn der sendende Knoten seine Funktionsfähigkeit in dieser Funktionsgruppe als nicht gegeben ansieht, und wo der sendende Knoten alle seine lokalen Funktionsgruppenmitgliedsfelder in eine zu sendende Nachricht kopiert, um sie an die Empfänger zu übertragen.

Entsprechend dieser Erfindung, die vom Gegenstand der beiliegenden unabhängigen Ansprüche 1 und 9 definiert ist, wird die Fehlererkennung funktionsbezogen durchgeführt, wobei ein Knotenrechner an mehreren Funktionen beteiligt sein kann. Die Datenkonsistenz wird innerhalb von Funktionsgruppen sichergestellt. Zum Beispiel können in einem Fahrzeug die vier Knotenrechner, die die Steuerung der Bremsen an den vier Rädern vornehmen, eine solche Funktionsgruppe bilden. In dieser Anwendung ist es wichtig, dass alle vier Radknotenrechner eine konsistente Sicht des Bremssystems haben. Ein Radknotenrechner kann jedoch auch an einer anderen Funktion beteiligt sein, die mit der unmittelbaren Bremsfunktion nichts zu tun hat. Ein Fehler in dieser "anderen" Funktion soll nicht zu einem Fehler der Bremsfunktion führen. Aus der Sicht der Anwendung ist es wichtig, dass innerhalb einer Funktionsgruppe ein Konsistenzverlust schnell erkannt wird, der Betrieb der anderen unabhängigen Funktionsgruppen, an denen ein Knotenrechner auch noch beteiligt ist, jedoch nicht beeinträchtigt wird.

Weiterhin bestimmt der Empfänger einer Nachricht das einem sendenden Knoten zugeordnete Bit in jedem seiner lokalen Funktionsgruppenmitgliedfelder unmittelbar nach dem erwarteten Empfangszeitpunkt einer Nachricht wie folgt: (1) Wenn keine der redundanten Nachrichten des sendenden Knotens syntaktisch korrekt eingetroffen ist, dann setzt der Empfänger die entsprechenden Werte der dem sendenden Knoten zugeordneten Bits in allen seinen lokalen Funktionsgruppenmitgliedsfeldern auf FALSCH, (2) Wenn das in der empfangenen Nachricht den Nachrichtensender betreffende Bit eines Funktionsgruppenmitgliedfelds auf FALSCH gesetzt ist, dann setzt der Empfänger das entsprechende Bit in seinem entsprechenden lokalen Funktionsgruppenmitgliedfeld auch auf FALSCH, (3) Wenn die Summe des Sendezeitpunktes der Nachricht und der bekannten Transportlatenz von dem vom Empfänger beobachteten Empfangszeitpunkt signifikant abweicht, dann setzt der Empfänger die dem Sender zugeordneten Bits in allen seinen entsprechenden lokalen Funktionsgruppenmitgliedsfeldern auf FALSCH. In allen anderen Fällen setzt der Empfänger die dem Sender entsprechenden Bits in allen seinen lokalen Funktionsgruppenmitgliedfeldern auf WAHR.

Weiteres vorteilhafte Ausführungsformen des Verfahrens sind in den Unteransprüchen angegeben wie folgt:

Nach Anspruch 2 kann weiters vorgesehen sein, dass jedes Mitglied einer Funktionsgruppe eine funktionsgruppenbezogene Konsistenzvariable verwaltet, die unmittelbar nach dem Senden auf WAHR gesetzt wird und die auf den Wert FALSCH gesetzt wird, sobald das in einer empfangenen Nachricht enthaltenen Funktionsgruppenmitgliedsfeld eines Nachfolgers des sendenden Knotens vom Inhalt des entsprechenden lokalen Funktionsgruppenmitgliedsfeldes abweicht.

Nach Anspruch 3 verwaltet jedes Mitglied einer Funktionsgruppe eine funktionsgruppenbezogene Quittungsvariable, die unmittelbar nach dem Senden auf den Wert FALSCH gesetzt wird und die auf den Wert WAHR gesetzt wird, sobald das in einer empfangenen Nachricht enthaltene auf den ursprünglich sendenden Knoten bezogene Bit des Funktionsgruppenmitgliedsfeldes in einer empfangenen Nachricht eines Nachfolgers des ursprünglich sendenden Knotens auf WAHR gesetzt ist.

Außerdem kann entsprechend Anspruch 4 vorgesehen sein, dass den an einer Funktionsgruppe beteiligten Knotenrechnern über eine oder mehrere Konfigurationsnachrichten bekannt gegeben wird, welche Knotenrechner eine Funktionsgruppe bilden, und wann welche Nachrichten von welchen Knotenrechnern zu erwarten sind.

Von besonderem Vorteil ist es, wenn nach Anspruch 5 die Konfigurationsnachrichten verschlüsselt sind.

Nach Anspruch 6 kann vorgesehen sein, dass die Periodizität der Übertragung innerhalb einer Funktionsgruppe durch die Angabe eines Periodizitätsbit in dem in vorgestellten Zeitformat spezifiziert wird und der Periodenbeginn jeweils zum Zeitpunkt stattfindet, zu dem alle Bits des Zeitwertes rechts vom Periodizitätsbit nicht gesetzt sind.

Weiters kann nach Anspruch 7 vorgesehen sein, dass der periodische Sendezeitpunkt einer Nachricht durch die Angabe des Offsets zum Periodenbeginn bestimmt wird.

Schließlich ist es auch noch ein Vorteil, wenn entsprechend Anspruch 8 der Kommunikationskontroller des sendenden Knotens einer Nachricht das ihm zugeordnete Bit in allen lokalen Funktionsgruppenmitgliedfeldern des sendende Knotens unmittelbar vor dem Senden auf FALSCH setzt, wenn innerhalb der letzten Kommunikationsrunde das dem sendenden Knoten zugeordnete Bit des Funktionsgruppenmitgliedfeldes vom Host-Computer nicht beschrieben wurde.

Die erfindungsgemäße Aufgabe wird weiters mit einem eingangs erwähnten Kommunikationskontroller eines Rechnerknotens eines verteilten Computersystems gelöst, in dessen Hardware erfindungsgemäß das oben beschriebene Verfahren implementiert ist.

Vorteilhaft ist es, wenn der Kommurükationskontroller dem Hostcomputer über eine Interruptleitung signalisiert, wenn ein Bit eines lokalen Funktionsgruppenmitgliedfelds in den Zustand FALSCH wechselt.

Ebenso kann es von Vorteil sein, wenn der Kommunikationskontroller dem Hostcomputer über eine Interruptleitung unmittelbar vor dem Senden einer Nachricht signalisiert, dass die Quittungsvariable nach Anspruch 4 den Wert FALSCH hat.

Schließlich ist es noch zweckmäßig, wenn der Kommunikationskontroller dem Hostcomputer über eine Interruptleitung unmittelbar vor dem Senden einer Nachricht signalisiert, dass die Konsistenzvariable nach Anspruch 3 den Wert FALSCH hat.

Die hier offengelegte Erfindung bringt folgende Vorteile gegenüber dem bekannten Stand der Technik der verteilten Fehlererkennung, wie er z.B. im TTP/C Protokoll [1-4] realisiert ist:

Es wird eine differenzierte Mitgliedschaft eingeführt, die es ermöglicht Knoten weiter zu betreiben, die in Teilfunktionen inkonsistent sind.

Durch die Einführung getrennter Funktionsgruppen zur Überwachung der Kommunikation und zur Überwachung eines verteilten Anwendungssystems kann zwischen Fehlern in der Kommunikation und Fehlern in der Anwendung unterschieden werden.

Der Mitgliedschaftsalgorithmus wird aus dem Übertragungsprotokoll gelöst.

Durch die harmonische Anbindung der Periodizität an die globale Zeit lassen sich synchrone Multiclustersysteme einfach realisieren.

Durch die hier offengelegte Erfindung ergeben sich somit folgende signifikante wirtschaftliche Vorteile:

Durch die Einführung von Funktionsgruppen wird die Konstruktion von Knotenrechnern, die an mehreren Funktionsgruppen beteiligt sind, erleichtert. Damit wird eine Reduktion der Anzahl der Knotenrechner in einem System und damit eine Kostenreduktion ermöglicht.

Die Zuverlässigkeit, einer gegebenen Funktion wird dadurch erhöht, dass der Ausfall einer anderen unabhängigen Funktion in einem Knotenrechner keinen Einfluss auf die gegebene Funktion hat.

Die Trennung der Fehlererkennungsfunktion von der unmittelbaren Protokollfunktion ermöglicht den Aufbau von fehlertoleranten Systemen mit Standardprotokollen, wie, z.B. ETHERNET, da das Fehlererkennungsprotokoll in einer Protokollschicht über dem Standardprotokoll der Datenkommunikation implementiert werden kann.

Im Folgenden ist die Erfindung an Hand der Zeichnung näher erläutert. In dieser zeigt
Fig.1 zeigt die Struktur eines verteilten Computersystems,
Fig. 2. zeigt den Aufbau eines Funktionsgruppenmitgliedfelds,
Fig. 3 zeigt den Aufbau einer Konfigurationsnachricht, und
Fig. 4 zeigt die Struktur des Zeitfeldes.

Im folgenden Abschnitt wird eine konkrete Realisierung des neuen Verfahrens an einem möglichen Beispiel mit fünf Knotenrechnern, die zwei Funktionsgruppen bilden, gezeigt. Die Erfindung ist nicht auf dieses eine konkrete Realisierungsbeispiel beschränkt. Der in diesem Beispiel vorgestellte Fehlerkerkennungsalgorithmus setzt voraus, dass die Datenübertragung in Kommunikationsrunden periodisch abläuft, dass jeder korrekt sendende Knoten Zugriff auf eine global synchronisierte Zeitbasis hat, dass jeder korrekte sendende Knoten exakt einmal pro Kommunikationsrunde eine Nachricht sendet, und dass maximal ein Fehler innerhalb von zwei Übertragungsrunden auftritt.

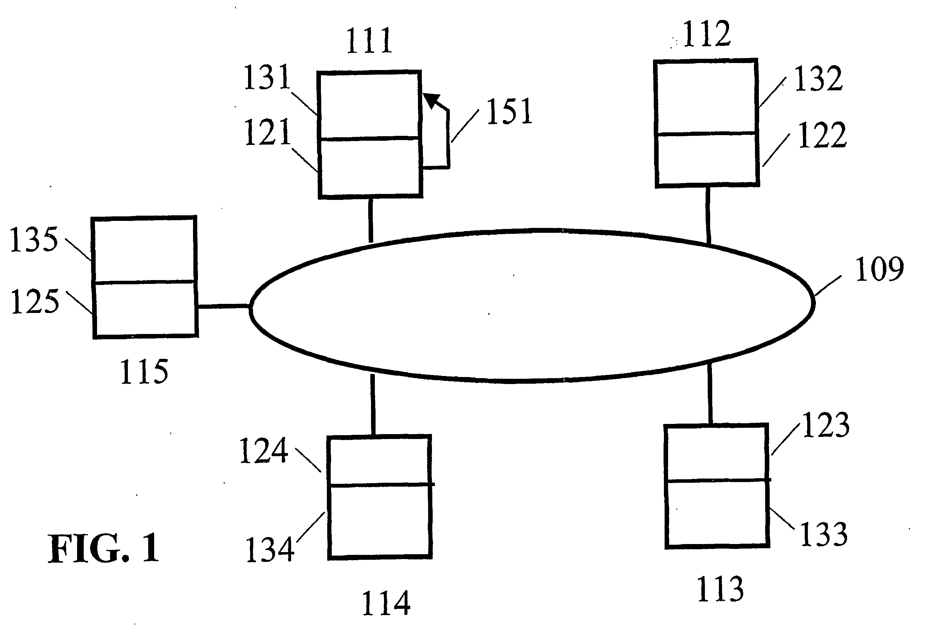

Fig. 1 zeigt ein Subsystem, einen Cluster mit fünf Knotenrechner 111, 112, 113, 114 und 115, die über mindestens je einen Kommunikationskontroller 121, 122, 123, 124 und 125 und über je einen Host Computer 131, 132, 133, 134 und 135 verfügen, und die über ein Echtzeitkommunikationssystem 109 bestehend aus einem oder mehreren Kommunikationskanälen Nachrichten austauschen. Der Kommunikationskontroller exekutiert das Kommunikationsprotokoll. Der Host-Computer führt die Applikationssoftware aus. Ein Echzeitkommunikationssystem 109 ist ein Kommunikationssystem, das Nachrichten innerhalb eines bekannten Echtzeitintervalls, der *Transportlatenz,* überträgt. Um die Zuverlässigkeit zu erhöhen, kann das Kommunikationssystem Ressourcenredundanz oder Zeitredundanz zur Anwendung bringen, d.h., für jede logische, vom Kommunikationskontroller 121 zur Verfügung gestellte Nachricht können gleichzeitig auf mehreren parallelen Kommunikationskanälen oder nacheinander auf einem Kommunikationskanal mehrere redundante Instanzen der logischen Nachricht, d.h. mehrere physische Nachrichten, gesendet werden. Es wird angenommen, dass dem Empfänger *a priori* der Sendezeitpunkt einer Nachricht bekannt gegeben wurde. Diese Bekanntgabe der Sendezeitpunkte kann unmittelbar vor dem Senden dynamisch erfolgen. Der Empfänger kann sich aus dem Sendezeitpunkt und der bekannten Transportlatenz des Kommunikationssystems ausrechnen, wann die letzte korrekte Instanz einer Nachricht spätestens beim Empfänger einzutreffen hat. Wenn bis zu diesem Zeitpunkt keine Nachricht vom Sender eingetroffen ist, dann ist aus der Sicht des Empfängers ein Fehler aufgetreten (Nachrichtenverlust).

Die fünf Knotenrechner 111, 112, 113, 114 und 115 können mehrere Funktionen ausführen und daher unterschiedlichen Funktionsgruppen angehören. In einem konkreten Anwendungsfall können die vier Knotenrechner 111,112,113 und 115 die Funktionsgruppe-1 bilden, und die vier Knotenrechner 111, 112, 113 und 114 die Funktionsgruppe-2 bilden. Zum Beispiel realisiert in einer bestimmten Anwendung Funktionsgruppe-1 die Funktion einer verteilten Uhrensynchronisation [6] und Funktionsgruppe-2 die Funktion eines verteilten Bremssystems mit vier Bremsen in einem Kraftfahrzeug, die von den Knotenrechner 111, 112, 113 und 114 gesteuert werden. Wenn ein Fehler in einer Bremse auftritt, so ist die im Rechnerknoten parallel ablaufende Funktion der Uhrensynchronisation von diesem Fehler nicht unmittelbar betroffen.

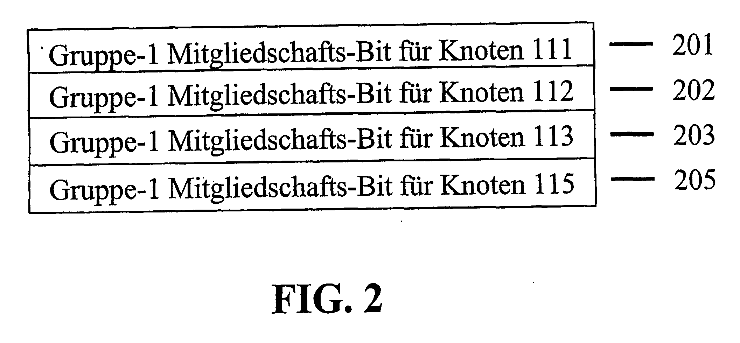

Entsprechend der vorliegenden Erfindung wird jeder dieser Funktionsgruppen ein eigenes Funktionsgruppenmitgliedfeld (Fig. 2) zugeordnet, dessen Bitlänge mindestens der Anzahl der Knotenrechner in der Funktionsgruppe entspricht, und wo jedem in einer Funktionsgruppe beteiligten Knotenrechner ein bestimmtes Bit, z.B. 201, 202, 203, 205, des Funktionsgruppenmitgliedfeldes eindeutig zugeordnet ist. In diesem Beispiel bedeutet z.B. der Wert WAHR des Bits 201 dass die Funktion-1 im Knotenrechner 111 korrekt ausgeführt wird und der Wert FALSCH dass die Funktion-1 im Knotenrechner 101 nicht korrekt ausgeführt wird. Jeder Knotenrechner 111 verwaltet eine lokale Version des Funktionsgruppenmitgliedfeldes jeder Funktionsgruppe, an der er beteiligt ist.

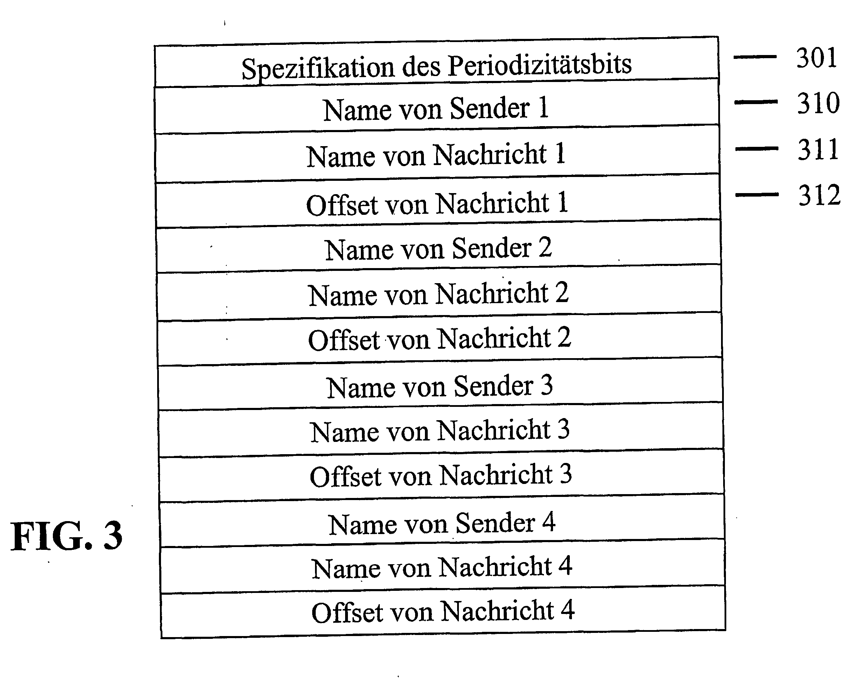

Es wird davon ausgegangen, dass die Nachrichten periodisch in Runden gesendet werden und dass die zeitliche Sendeordnung der Nachrichten innerhalb einer Funktionsgruppe *a priori* festgelegt wird. Diese Festlegung kann über eine Konfigurationsnachricht (Fig. 3) erfolgen, die angibt, welche Periodizität 301 eine Funktionsgruppe hat und wann (Offset 312 der Nachricht 1, etc.) jeder Knoten 310 welche Nachrichten 311 zu senden hat. Innerhalb einer Funktionsgruppe sind alle Nachrichten zeitlich geordnet. Da ein Echtzeitkommunikationssystem eine bekannte Transportlatenz haben muss, ist somit auch festgelegt, wann eine Nachricht beim Empfänger einzutreffen hat. Es ist vorteilhaft, die Konfigurationsnachrichten zu verschlüsseln, um zu verhindern, dass ein fehlerhafter oder eine böswilliger Rechnerknoten, der dazu nicht berechtigt ist, eine falsche Konfigurationsnachricht an richtige Rechnerknoten verteilen kann.

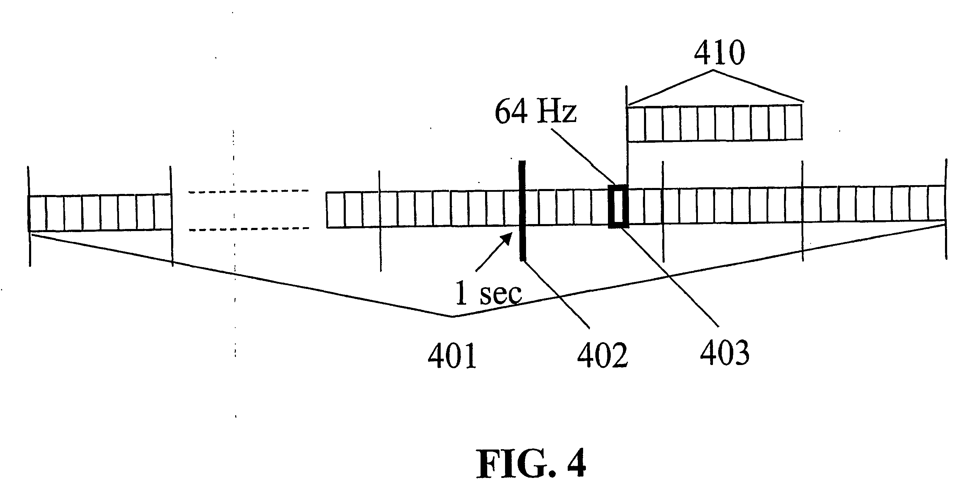

Die Rundenperiode (Feld 301 in Fig. 3) kann direkt von der global zur Verfügung stehenden Zeit abgeleitet werden. Fig. 4 zeigt ein von der Object Management Group (OMG) standardisierte Zeitdarstellung [5], die aus 8 Byte besteht. Diese Zeitdarstellung 401 verwendet das Binärformat, wobei die volle physikalische Sekunde 402 den zentralen Bezugswert darstellt. Mit diesem Zeitformat 401 lässt sich jeder Zeitpunkt innerhalb der nächsten zehntausend Jahre mit einer Genauigkeit von ca. 60 Nanosekunden darstellen. Jedem Bit dieses Zeitformats kann eine Periodizität zugeordnet werden, die sich aus der Stellung des Bits im Zeitformat ergibt. Wenn die Periodizität einer Runde über ein so ausgewähltes Periodizitätsbit 403 spezifiziert wird, so stehen alle Perioden in allen Subsystemen zueinander in einem harmonischen Verhältnis. Im Beispiel der Fig. 4 ist das Periodizitätsbit 403 das 6. Bit rechts von dem vollen Sekundenbit 402. Das Periodizitätsbit 403 bestimmt somit eine Rundenfrequenz von 1/26 Sekunden, das entspricht 64 Hz. Der Periodenbeginn ist definiert als der Zeitpunkt, zu dem alle Bits rechts vom Periodizitätsbit 403 im Zeitformat 401 nicht gesetzt sind. Der Sendezeitpunkt eines Knotenrechners kann durch die Angabe des Offsets 410 vom Periodenbeginn präzise spezifiziert werden. Wenn die Periodizität jeder Runde eine Zweierpotenz der kleinsten Runde entspricht, dann ist es möglich, große synchrone Systeme, die über eine Vielzahl von Clustern verfügen, einfach aufzubauen. In den unterschiedlichen Clustern können auch unterschiedliche Kommunikationsprotokolle eingesetzt werden.

Unmittelbar vor dem Senden einer Nachricht setzt der sendende Kontenrechner (der Sender) 111 das ihm zugeordnete Bit in seinem lokalen Funktionsgruppenmitgliedfeld 201 auf WAHR, wenn der Sender seine Funktionsfähigkeit in dieser Funktionsgruppe als gegeben ansieht. Vor dem Senden einer Nachricht setzt der Sender 111 das ihm zugeordnete Bit in seinem lokalen Funktionsgruppenmitgliedfeld 201 auf FALSCH wenn der Sender seine Funktionsfähigkeit in dieser Funktionsgruppe als nicht gegeben ansieht. Im vorangegangenen Beispiel mit der defekten Bremse wird der Sender sein Bit im Funktionsgruppenmitgliedfeld-1, der Uhrensynchronisation auf WAHR und sein Bit im Funktionsgruppenmitgliedfeld-2, dem Bremssystem, auf FALSCH setzen, wenn die lokale Bremse fehlerhaft ist.

Unmittelbar vor dem Senden einer Nachricht muss der Sender alle seine lokalen Funktionsgruppenmitgliedsfelder in die zu sendende Nachricht kopieren und mit der Nachricht an die Empfänger senden.

Der Empfänger einer Nachricht setzt das dem Sender zugeordnete Bit in jedem seiner lokalen Funktionsgruppenmitgliedfelder unmittelbar nach dem erwarteten Empfangszeitpunkt einer Nachricht von einem Sender wie folgt:
(1) Wenn bis zu diesem Zeitpunkt keine der redundanten Nachrichten des Senders syntaktisch korrekt eingetroffen ist, dann setzt der Empfänger den Wert des dem Sender zugeordneten Bits in all seinen betroffenen lokalen Funktionsgruppenmitgliedsfeldern auf FALSCH. Eine Nachricht ist syntaktisch korrekt, wenn die CRC Überprüfung der Nachricht keinen Fehler anzeigt.
(2) Wenn das in der empfangenen Nachricht dem Nachrichtensender zugeordnete Bit in einem Funktionsgruppenmitgliedfeld auf FALSCH gesetzt ist, dann setzt der Empfänger das entsprechende Bit in seinem entsprechenden lokalen Funktionsgruppenmitgliedsfeld auf FALSCH.
(3) Wenn die Summe des Sendezeitpunktes der Nachricht und der bekannten Transportlatenz von dem vom Empfänger beobachteten Empfangszeitpunkt signifikant abweicht, dann setzt der Empfänger den Wert des dem Sender zugeordneten Bits in all seinen lokalen Funktionsgruppenmitgliedsfeldern auf FALSCH. Der beobachtete Empfangszeitpunkt weicht vom erwarteten Empfangszeitpunkt signifikant ab, wenn die Differenz zwischen diesen beiden Zeitpunkten, die in den aktiven Intervallen einer *sparse timebase* (siehe[6], p. 56) liegen müssen, größer ist als die Dauer eines aktiven Zeitintervalls der *sparse timebase.*
(4) In allen anderen Fällen setzt der Empfänger die entsprechenden Bits in seinen lokalen Funktionsgruppenmitgliedfeldern auf WAHR.

Jedes Mitglied einer Funktionsgruppe kann eine funktionsgruppenbezogene Konsistenzvariable verwalten, die unmittelbar nach dem Senden auf den Wert WAHR gesetzt wird und die auf den Wert FALSCH gesetzt wird, sobald das in einer empfangenen Nachricht enthaltenen Funktionsgruppenmitgliedsfeld eines Nachfolgers des Senders vom Inhalt des entsprechenden lokalen Funktionsgruppenmitgliedsfeldes abweicht. Durch diese Regel wird eine Inkonsistenz im System entdeckt, die innerhalb der letzten Runde beobachtet werden konnte.

Jedes Mitglied einer Funktionsgruppe kann eine funktionsgruppenbezogene Quittungsvariable verwalten, die unmittelbar nach dem Senden auf FALSCH gesetzt wird und die auf den Wert WAHR gesetzt wird, sobald das in einer empfangenen Nachricht enthaltene, auf den Sender bezogene Bit des Funktionsgruppenmitgliedsfeldes in einer empfangenen Nachricht eines Nachfolgers des Senders auf WAHR gesetzt ist. Durch diese Regel wird überprüft,ob irgendein Empfänger die Nachricht des Senders erhalten hat.

Wenn der Kommunikationskontroller 121 des Senders einer Nachricht das dem Sender zugeordnete Bit in allen lokalen Funktionsgruppenmitgliedfeldern des Senders unmittelbar vor dem Senden auf FALSCH setzt, im Falle, dass innerhalb der letzten Kommunikationsrunde das dem Sender zugeordnete Bit des Funktionsgruppenmitgliedfeldes vom Hostcomputer 131 nicht beschrieben wurde, dann wird der Hostcomputer 131 gezwungen, in jeder Runde in jedem Funktionsgruppenmitgliedfeld das dem Sender zugeordnete Bit erneut auf WAHR zu setzten, sofern die betreffende Funktion noch immer erfüllt wird. Durch diese Regel wird verhindert, dass ein *fail-silent* Ausfall einer Funktion des Hostrechners 131 von den Kommunikationspartnern innerhalb einer Funktionsgruppe nicht beobachtet werden kann.

Wenn in einem Anwendungsfall gewünscht wird zu unterscheiden, ob ein Fehler in dem Kommunikationssystem 109 oder in einem Hostcomputer 131 aufgetreten ist, so können zwei verschiedene Funktionsgruppen mit entsprechenden Funktionsgruppenmitgliedfeldern eingeführt werden. Die eine Funktionsgruppe überwacht die Funktion der Kommunikation, während die andere Funktionsgruppe die Funktion der Anwendung im Host überwacht.

Um den Host-Rechner zu entlasten und die Verarbeitung zu beschleunigen kann, das offengelegte Verfahren zur konsistenten Fehlererkennung in einem verteilten Computersystem auch in der Hardware des Kommunikationskontrollers 121 verwirklicht werden. In diesem Fall kann es zweckmäßig sein, den Hostcomputer 131 über eine-Interruptleitung 151 zu signalisieren (Fehlerinterrupt), wenn ein Bit eines lokalen Funktionsgruppenmitgliedfeldes des Kommunikationskontrollers 121 vom Zustand WAHR in den Zustand FALSCH wechselt. Wenn kein Fehlerinterrupt auftritt, kann der Hostcomputer 131 annehmen, dass die Kommunikation innerhalb der Funktionsgruppen des Hostcomputers fehlerfrei funktioniert.

Der Kommunikationskontroller 121 kann dem Hostprozessor 131 über eine Interruptleitung 151 auch signalisieren, wenn in der vergangenen Runde keiner der korrekten Empfänger die letzte gesendete Nachricht dieses Knotenrechners quittiert hat oder wenn in der letzten Runde eine Inkonsistenz beobachtet wurde.

## Patentansprüche

1. Verfahren zur konsistenten Erkennung von Fehlern in einem verteilten Echtzeitcomputersystem, mit einer Vielzahl von Knotenrechnern (111, 112, 113, 114, 115), die über mindestens je einen Kommunikationskontrollern (121, 122, 123, 124, 125) und über je einen Host-Computer (131, 132, 133, 134, 135) verfügen, und die über ein rundenbasiertes Echtzeitkommunikationssystem (109) bestehend aus einem oder mehreren Kommunikationskanälen Nachrichten austauschen, wobei für jede logische Nachricht eine oder mehrere redundante physische Nachrichten transportiert werden, und wo alle Knotenrechner über einen Zugriff auf eine global synchronisierte Zeit verfügen, **dadurch gekennzeichnet, dass** die Knotenrechner Funktionsgruppen bilden, wobei ein Knotenrechner Mitglied mehrerer Funktionsgruppen sein kann, und wo jeder Funktionsgruppe ein dediziertes Funktionsgruppenmitgliedfeld zugeordnet ist, dessen Bitlänge mindestens der Anzahl der Knotenrechner in dieser Funktionsgruppe entspricht, und wo jedem in einer Funktionsgruppe beteiligten Knotenrechner (111) ein spezifiziertes Bit (201) des Funktionsgruppenmitgliedfeldes eindeutig zugeordnet ist, und wo jeder Knotenrechner eine lokale Version des Funktionsgruppenmitgliedfeldes jeder Funktionsgruppe, an der er beteiligt ist, verwaltet, und wo vor dem Senden einer Nachricht der sendende Knoten das ihm zugeordnete Bit in seinem lokalen Funktionsgruppenmitgliedfeld auf WAHR setzt, wenn der sendende Knoten seine Funktionsfähigkeit in dieser Funktionsgruppe als gegeben ansieht, und wo vor dem Senden einer Nachricht der sendende Knoten das ihm zugeordnete Bit in seinem lokalen Funktionsgruppenmitgliedfeld auf FALSCH setzt, wenn der sendende Knoten seine Funktionsfähigkeit in dieser Funktionsgruppe als nicht gegeben ansieht, und wo der sendende Knoten alle seine lokalen Funktionsgruppenmitgliedsfelder in eine zu sendende Nachricht kopiert, um sie an die Empfänger zu übertragen, und wobei weiters der Empfänger einer Nachricht das einem sendenden Knoten zugeordnete Bit in jedem seiner lokalen Funktionsgruppenmitgliedfelder unmittelbar nach dem erwarteten Empfangszeitpunkt einer Nachricht wie folgt bestimmt: (1) Wenn keine der redundanten Nachrichten des sendenden Knotens syntaktisch korrekt eingetroffen ist, dann setzt der Empfänger die entsprechenden Werte der dem sendenden Knoten zugeordneten Bits in allen seinen lokalen Funktionsgruppenmitgliedsfeldern auf FALSCH, (2) Wenn das in der empfangenen Nachricht den Nachrichtensender betreffende Bit eines Funktionsgruppenmitgliedfelds auf FALSCH gesetzt ist, dann setzt der Empfänger das entsprechende Bit in seinem entsprechenden lokalen Funktionsgruppenmitgliedfeld auch auf FALSCH, (3) Wenn die Summe des Sendezeitpunktes der Nachricht und der bekannten Transportlatenz von dem vom Empfänger beobachteten Empfangszeitpunkt signifikant abweicht, dann setzt der Empfänger die dem Sender zugeordneten Bits in allen seinen entsprechenden lokalen Funktionsgruppenmitgliedsfeldern auf FALSCH und allen anderen Fällen setzt der Empfänger die dem Sender entsprechenden Bits in allen seinen lokalen Funktionsgruppenmitgliedfeldern auf WAHR.

2. Verfahren nach Anspruch 1, **dadurch gekennzeichnet, dass** jedes Mitglied einer Funktionsgruppe eine funktionsgruppenbezogene Konsistenzvariabel verwaltet, die unmittelbar nach dem Senden auf WAHR gesetzt wird und die auf den Wert FALSCH gesetzt wird, sobald das in einer empfangenen Nachricht enthaltenen Funktionsgruppenmitgliedsfeld eines Nachfolgers des sendenden Knotens vom Inhalt des entsprechenden lokalen Funktionsgruppenmitgliedsfeldes abweicht.

3. Verfahren nach Anspruch 1 oder 2, **dadurch gekennzeichnet, dass** jedes Mitglied einer Funktionsgruppe eine funktionsgruppenbezogene Quittungsvariabel verwaltet, die unmittelbar nach dem Senden auf den Wert FALSCH gesetzt wird und die auf den Wert WAHR gesetzt wird, sobald das in einer empfangenen Nachricht enthaltene auf den ursprünglich sendenden Knoten bezogene Bit des Funktionsgruppenmitgliedsfeldes in einer empfangenen Nachricht eines Nachfolgers des ursprünglich sendenden Knotens auf WAHR gesetzt ist.

4. Verfahren nach einem der Ansprüche 1 bis 3, **dadurch gekennzeichnet, dass** den an einer Funktionsgruppe beteiligten Knotenrechnern über eine oder mehrere Konfigurationsnachrichten bekannt gegeben wird, welche Knotenrechner eine Funktionsgruppe bilden, und wann welche Nachrichten von welchen Knotenrechnern zu erwarten sind.

5. Verfahren nach einem der Ansprüche 1 bis 4, **dadurch gekennzeichnet, dass** die Konfigurationsnachrichten verschlüsselt sind.

6. Verfahren nach einem der Ansprüche 1 bis 5, **dadurch gekennzeichnet, dass** die Periodizität der Übertragung innerhalb einer Funktionsgruppe durch die Angabe eines Periodizitätsbit (403) in dem in (401) vorgestellten Zeitformat spezifiziert wird und der Periodenbeginn jeweils zum Zeitpunkt stattfindet, zu dem alle Bits des Zeitwertes rechts vom Periodizitätsbit (403) nicht gesetzt sind.

7. Verfahren nach einem der Ansprüche 1 bis 6, **dadurch gekennzeichnet, dass** der periodische Sendezeitpunkt einer Nachricht durch die Angabe des Offsets (410) zum Periodenbeginn bestimmt wird.

8. Verfahren nach einem oder mehreren der Ansprüche 1 bis 7, **dadurch gekennzeichnet, dass** der Kommunikationskontroller (121) des sendenden Knotens einer Nachricht das ihm zugeordnete Bit in allen lokalen Funktionsgruppenmitgliedfeldern des sendende Knotens unmittelbar vor dem Senden auf FALSCH setzt, wenn innerhalb der letzten Kommunikationsrunde das dem sendenden Knoten zugeordnete Bit des Funktionsgruppenmitgliedfeldes vom Host-Computer nicht beschrieben wurde.

9. Kommunikationskontroller eines Rechnerknotens eines verteilten Computersystems, **dadurch gekennzeichnet, dass** die Verfahrensschritte von einem oder mehreren der Ansprüche 1 bis 8 in der Hardware des Kommunikationskontrollers (121) implementiert sind.

10. Kommunikationskontroller eines Rechnerknotens eines verteilten Computersystems nach Anspruch 9, **dadurch gekennzeichnet, dass** der Kommunikationskontroller (121) dem Hostcomputer (131) über eine Interruptleitung (151) signalisiert, wenn ein Bit eines lokalen Funktionsgruppenmitgliedfelds in den Zustand FALSCH wechselt.

11. Kommunikationskontroller eines Rechnerknotens eines verteilten Computersystems nach Anspruch 9, **dadurch gekennzeichnet, dass** der Kommunikationskontroller (121) dem Hostcomputer (131) über eine Interruptleitung (151) unmittelbar vor dem Senden einer Nachricht signalisiert, dass die Quittungsvariable nach Anspruch 4 den Wert FALSCH hat.

12. Kommunikationskontroller eines Rechnerknotens eines verteilten Computersystems nach Anspruch 9, **dadurch gekennzeichnet, dass** der Kommunikationskontroller (121) dem Hostcomputer (131) über eine Interruptleitung (151) unmittelbar vor dem Senden einer Nachricht signalisiert, dass die Konsistenzvariable nach Anspruch 3 den Wert FALSCH hat.

## Claims

1. A method for the consistent detection of errors in a distributed real-time computer system, comprising a plurality of remote communication computers (111, 112, 113, 114, 115), each of which has at least one communications controller (121, 122, 123, 124, 155) and at least one host computer (131, 132, 133, 134, 135), and which exchange messages via a round-based real-time communications system (109) consisting of one or more communications channels, and for each logical message one or more redundant physical messages are transported, all of the remote communication computers having access to a globally synchronized time base, **characterized in that** the remote communication computers form function groups, in which any one remote communication computer can be a member of several function groups, there being assigned to each function group a dedicated function group member field, the bit length of which corresponds to at least the number of remote communication computers in the particular function group, whilst each remote communication computer (111) participating in a function group is unequivocally assigned a specific bit (201) of the function group member field and each remote communication computer administers a local version of the function group member field of each function group in which it participates, and, before sending a message, the sending remote communication computer sets the bit assigned to it to TRUE in its local function group member field, if said sending remote communication computer views its operability in this function group as given, whereas said sending remote communication computer, before sending a message, sets the bit assigned to it to FALSE in its local function group member field if said sending remote communication computer views its operability in this function group as not given, and said sending remote communication computer copies all of its local function group member fields into a message intended for sending, in order to transmit them to the receivers, and, furthermore, the receiver of a message determines the bit assigned to said sending remote communication computer in each of its local function group member fields immediately after the expected reception time of a message, as follows:
(1) if none of the redundant messages of the sending remote communication computer arrived in syntactically correct form, then said receiver will set the corresponding values of the bits assigned to said sending remote communication computer to FALSE in all of its local function group member fields,
(2) if the bit of a function group member field in the received message relating to the message sender is set to FALSE, then said receiver will also set the corresponding bit to FALSE in its corresponding local function group member field, and
(3) if the sum of the transmission time of said message and the known transport latency significantly deviates from the reception time observed by said receiver, then said receiver will set the bits that are assigned to the sender to FALSE in all of its corresponding local function group member fields, and in all other cases said receiver will set the bits corresponding to said sender to TRUE in all of its local function group member fields.

2. The method as defined in Claim 1, **characterized in that** each member of a function group administers a function group-related consistency variable, which is set to TRUE immediately after a message has been sent and which is set to the value FALSE as soon as the function group member field, contained in a received message, of a successor to the sending remote communication computer deviates from the content of the corresponding local function group member field.

3. The method as defined in Claim 1 or Claim 2, **characterized in that** each member of a function group administers a function group-related acknowledgment variable, which is set to the value FALSE immediately after a message has been sent and which is set to the value TRUE as soon as the bit of the function group member field related to the originally sending remote communication computer and contained in a received message is set to TRUE by a received message of a successor to the originally sending remote communication computer.

4. The method as defined in any one of Claims 1 to 3, **characterized in that** the remote communication computers participating in a function group are provided, via one or more configuration messages, with information as to which remote communication computers form a function group and which messages are to be expected from which remote communication computers and when.

5. The method as defined in any one of Claims 1 to 4, **characterized in that** the configuration messages are encrypted.

6. The method as defined in any one of Claims 1 to 5, **characterized in that** the periodicity of the transmission within one function group is specified by stipulating a periodicity bit (403) in the time format presented in (401), and the period begins at the time at which all bits of the time value to the right of the periodicity bit (403) are not set.

7. The method as defined in any one of Claims 1 to 6, **characterized in that** the periodic transmission time of a message is determined by stipulating the offset (410) at the beginning of the period.

8. The method as defined in one or more of Claims 1 to 7, **characterized in that** the communications controller (121) of the remote communication computer sending a message sets the bit assigned to it to FALSE in all local function group members of the sending remote communication computer immediately before said message is sent, if the bit, assigned to the sending remote communication computer, of the function group member field was not described by the host computer within the previous communications round.

9. A communications controller of a remote communication computer of a distributed computer system, **characterized in that** the method steps of one or more of Claims 1 to 8 are implemented in the hardware of the communications controller (121).

10. The communications controller of a remote communication computer of a distributed computer system as defined in Claim 9, **characterized in that** the communications controller (121) signals the host computer (131), via an interrupt line (151), when a bit of a local function group member field switches to the FALSE state.

11. The communications controller of a real-time remote communication computer of a distributed computer system as defined in Claim 9, **characterized in that**, immediately before a message is sent, said communications controller (121) signals said host computer (131), via an interrupt line (151), to the effect that the acknowledgment variable as defined in Claim 4 has the value FALSE.

12. The communications controller of a remote communication computer of a distributed computer system as defined in Claim 9, **characterized in that**, immediately before a message is sent, said communications controller (121) signals the said computer (131), via an interrupt line (151), to the effect that the consistency variable as defined in Claim 3 has the value FALSE.

## Revendications

1. Procédé pour la détection consistante d'erreurs dans un système d'ordinateurs partagé en temps réel, avec une pluralité d'ordinateurs nodaux (111, 112, 113, 114, 115) disposant au moins d'un contrôleur de communication (121, 122, 123, 124, 125) chacun et d'un ordinateur-hôte (131, 132, 133, 134, 135) chacun, et échangeant des messages au moyen d'un système de communication en temps réel (109) basé circuit composé d'un ou de plusieurs canaux de communication, un ou plusieurs messages physiques redondants étant transportés pour chaque information logique, et où tous les ordinateurs nodaux disposent d'un accès à un temps globalement synchronisé, **caractérisé en ce que** les ordinateurs nodaux forment des groupes fonctionnels, un ordinateur nodal pouvant être membre de plusieurs groupes fonctionnels, un champ dédié de membre de groupe fonctionnel étant attribué à chaque groupe fonctionnel, dont la longueur binaire correspond au moins au nombre des ordinateurs nodaux dans ledit groupe fonctionnel, un bit spécifique (201) du champ de membre de groupe fonctionnel étant clairement attribué à chaque ordinateur nodal (111) participant à un groupe fonctionnel, chaque ordinateur nodal administrant une version locale du champ de membre de groupe fonctionnel de chaque groupe fonctionnel auquel il participe, le noeud émetteur fixant sur VRAI le bit qui lui est attribué dans son champ local de membre de groupe fonctionnel avant l'émission d'un message si le noeud émetteur considère sa capacité fonctionnelle comme donnée dans ledit groupe fonctionnel, le noeud émetteur fixant sur FAUX le bit qui lui est attribué dans son champ local de membre de groupe fonctionnel avant l'émission d'un message si le noeud émetteur considère sa capacité fonctionnelle comme non donnée dans ledit groupe fonctionnel, le noeud émetteur copiant tous ses champs locaux de membre de groupe fonctionnel dans un message à émettre pour transmettre ceux-ci aux destinataires, le destinataire d'un message définissant en outre comme suit le bit attribué à un noeud émetteur dans chacun de ses champs locaux de membre de groupe fonctionnel, immédiatement après le moment de réception escompté d'un message : (1) si aucun des messages redondants du noeud émetteur n'est arrivé avec une syntaxe correcte, le récepteur fixera sur FAUX les valeurs correspondantes des bits attribués au noeud émetteur dans tous ses champs locaux de membre de groupe fonctionnel ; (2) si le bit d'un champ de membre de groupe fonctionnel concernant l'émetteur du message dans le message reçu est fixé sur FAUX, le récepteur fixera également sur FAUX le bit correspondant dans son champ local de membre de groupe fonctionnel correspondant ; (3) si le total du moment d'émission du message et de la latence de transport connue s'écarte sensiblement du moment de réception observé par le récepteur, le récepteur fixera sur FAUX les bits attribués à l'émetteur dans tous ses champs locaux de membre de groupe fonctionnel correspondants et, dans tous les autres cas, le récepteur fixera sur VRAI les bits correspondant à l'émetteur dans tous ses champs locaux de membre de groupe fonctionnel.

2. Procédé selon la revendication 1, **caractérisé en ce que** chaque membre d'un groupe fonctionnel administre une variable de consistance relative au groupe fonctionnel, laquelle est fixée sur VRAI immédiatement après émission, et est fixée sur la valeur FAUX dès qu'un champ de membre de groupe fonctionnel contenu dans un message reçu d'un successeur du noeud émetteur s'écarte du contenu du champ local de membre de groupe fonctionnel correspondant.

3. Procédé selon la revendication 1 ou 2, **caractérisé en ce que** chaque membre d'un groupe fonctionnel administre une variable d'acquittement relative au groupe fonctionnel, laquelle est fixée sur la valeur FAUX immédiatement après émission, et est fixée sur la valeur VRAI dès que le bit du champ de membre de groupe fonctionnel relatif au noeud émetteur initial et contenu dans un message reçu est fixé sur VRAI dans un message reçu d'un successeur du noeud émetteur initial.

4. Procédé selon l'une des revendications 1 à 3, **caractérisé en ce qu'**il est donné à connaître aux ordinateurs nodaux participant à un groupe fonctionnel, au moyen d'un ou de plusieurs messages de configuration, quels ordinateurs forment un groupe fonctionnel, et quand quels messages sont à attendre de quels ordinateurs nodaux.

5. Procédé selon l'une des revendications 1 à 4, **caractérisé en ce que** les messages de configuration sont codés.

6. Procédé selon l'une des revendications 1 à 5, **caractérisé en ce que** la périodicité de transmission à l'intérieur d'un groupe fonctionnel est spécifiée par l'indication d'un bit de périodicité (403) dans le format de temps présenté en (401), et **en ce que** le début de période est déterminé par le moment où tous les bits de la valeur de temps ne sont pas fixés à la droite du bit de périodicité (403).

7. Procédé selon l'une des revendications 1 à 6, **caractérisé en ce que** le moment d'émission périodique d'un message est déterminé par indication de décalage (410) au début de période.

8. Procédé selon l'une ou plusieurs des revendications 1 à 7, **caractérisé en ce que** le contrôleur de communication (121) du noeud émetteur d'un message fixe sur FAUX le bit qui lui est attribué dans tous les champs locaux de membre de groupe fonctionnel du noeud émetteur, immédiatement avant l'émission, si à l'intérieur du dernier circuit de communication le bit du champ de membre de groupe fonctionnel attribué au noeud émetteur n'a pas été décrit par l'ordinateur-hôte.

9. Contrôleur de communication d'un noeud d'ordinateur d'un système d'ordinateurs partagé, **caractérisé en ce que** les étapes de procédé d'une ou de plusieurs des revendications 1 à 8 sont implémentées dans le matériel du contrôleur de communication (121).

10. Contrôleur de communication d'un noeud d'ordinateur d'un système d'ordinateurs partagé selon la revendication 9, **caractérisé en ce que** le contrôleur de communication (121) signale à l'ordinateur hôte (131) via une ligne d'interruption (151) si un bit d'un champ local de membre de groupe fonctionnel est commuté vers l'état FAUX.

11. Contrôleur de communication d'un noeud d'ordinateur d'un système d'ordinateurs partagé selon la revendication 9, **caractérisé en ce que** le contrôleur de communication (121) signale à l'ordinateur hôte (131) immédiatement avant l'émission d'un message, via une ligne d'interruption (151), que la variable d'acquittement selon la revendication 4 a la valeur FAUX.

12. Contrôleur de communication d'un noeud d'ordinateur d'un système d'ordinateurs partagé selon la revendication 9, **caractérisé en ce que** le contrôleur de communication (121) signale à l'ordinateur hôte (131) immédiatement avant l'émission d'un message, via une ligne d'interruption (151), que la variable de consistance selon la revendication 3 a la valeur FAUX.
